# FASCICULE DE BREVET EUROPEEN

(11) **EP 1 213 115 B1**
(45) Date de publication et mention de la délivrance du brevet: **21.03.2007**
(21) Numéro de dépôt: 01420221.2
(22) Date de dépôt: 07.11.2001
(51) Int. Cl.: B29B 17/00, C08L 23/04, C08L 23/10

(54) **Procédé pour la récupération de déchets de matières thermoplastiques semi-cristallines**
Verfahren zur Rückgewinnung von teilkristallinen thermoplastischen Abfallmaterialien
Method for recovering semi-crystalline thermoplastic waste material

(30) Priorité: 08.11.2000 FR 0014358
(43) Date de publication de la demande: 12.06.2002
(73) Titulaire: BMV SARL, 75014 France (FR)
(72) Inventeur: Adelhanoff, M. Yves, 69300 Caluire (FR)
(74) Mandataire: Prugneau, Philippe

(56) Documents cités:
- EP-A- 0 533 304
- US-A- 5 824 745
- US-A- 5 951 940
- YURKHANOV V B ET AL: "STRUCTURAL MATERIAL BASED ON RECYCLED POLYETHYLENE AND POLYETHYLENE TEREPHTHALATE" INTERNATIONAL POLYMER SCIENCE AND TECHNOLOGY,GB,RAPRA TECHNOLOGIES, SHROPSHIRE, vol. 25, no. 10, 1998, pages T87-T89, XP000832139 ISSN: 0307-174X

## Description

La présente invention concerne un procédé pour la récupération et la réutilisation de déchets de matières thermoplastiques semi-cristallines, ce procédé s'appliquant plus particulièrement au recyclage de déchets de polyéthylène téréphtalate (aussi désigné habituellement par l'abréviation "PET"), mais pouvant aussi intéresser d'autres matières thermoplastiques analogues.

A ce jour, les déchets de polyéthylène téréphtalate, tels que notamment les déchets de bouteilles en "PET", sont principalement utilisés dans l'industrie textile où l'on en fait de la fibre, ou dans le secteur de l'emballage où l'on en réincorpore une partie pour réaliser du film. Par contre, en l'état actuel, les déchets de polyéthylène téréphtalate ne sont pas utilisables comme matière à mouler sur des presses à injecter.

En effet, le polyéthylène téréphtalate est un thermoplastique semi-cristallin, qu'il est difficile de cristalliser rapidement, et qui présente par conséquent des pertes de propriétés mécaniques, notamment quant à son module de flexion, lorsqu'il reste en phase amorphe.

De plus, il s'agit d'une matière très sensible à l'hydrolyse, à l'état fondu, ce qui est également la cause de caractéristiques mécaniques médiocres, rendant le produit cassant lorsqu'il n'est pas correctement séché.

Ainsi, il est exclu de réutiliser des déchets de "PET" à l'état pur, ou quasiment pur, pour le moulage par injection de produits qui doivent, en général, posséder des propriétés mécaniques convenables, notamment une bonne résistance à la flexion et aux chocs, ce qui est par exemple le cas des palettes de manutention en matière plastique

On connaît par exemple des documents de brevet US5824745, EP0533304 et US5951940 des procédés pour la récupération de déchets en matière thermoplastique semi-cristallines. On connaît aussi de la publication de Yurkhanov et Al. intitulée « Structural material based on recycled polyethylene and polyethylene terephtalate » dans la revue International Polymer Science and Technology", pages T87-89, volume 25, N°10 de 1998 un procédé pour le recyclage de PET dans lequel on mélange du PET avec des polyoléfines (HDPE, LDPE), dans une proportion de PET de l'ordre de 30% en masse, avant un moulage par injection. Le mélange est complété avec un plastifiant (CPWM). Le traitement des polyoléfines est réalisé dans la même gamme de température que la température de fusion du PET qui est par conséquent recristallisé et présente des propriétés mécaniques médiocres.

La présente invention vise à remédier à ces inconvénients, en fournissant un procédé qui permet le recyclage des déchets de "PET", ou de matières thermoplastiques analogues, sur des presses à injecter, de manière à offrir un nouveau débouché pour ces déchets, tout en garantissant la qualité des produits issus de cette transformation.

A cet effet, l'invention a essentiellement pour objet un procédé pour la récupération de déchets de matières thermoplastiques semi-cristallines, en particulier pour le recyclage de déchets de polyéthylène téréphatalate (PET), procédé consistant à incorporer ces déchets de matières thermoplastiques semi-cristallines, sous forme amorphe, à une matrice à base de polyoléfine, avant d'utiliser le mélange ainsi obtenu comme matière transformable sur une presse à injecter, caractérisé en ce que ce mélange est transformé, sur la presse à injecter, à une température de fusion des matières semi-cristallines utilisées.

Ainsi, l'idée inventive consiste à considérer ces déchets de polyéthylène téréphtalate, ou matière semi-cristalline analogue, non pas comme une matière utilisable seule ou en tant qu'élément principal, mais au contraire comme une charge minoritaire dans un mélange. Cette approche permet de contourner les difficultés exposées plus haut, et en particulier de faire en sorte que l'ajout du polyéthylène téréphtalate ne rende pas le mélange cassant, et lui confère, à l'état définitif, une tenue aux chocs meilleure.

Dans tous les cas, le mélange ainsi obtenu doit être transformé, sur la presse à injecter, à une température inférieure à la température de fusion des matières thermopastiques semi-cristallines utilisées, soit environ 280-290°C pour le polyéthylène téréphtalate, ce qui permet de considérer effectivement lesdites matières thermoplastiques semi-cristallines comme une charge amorphe.

A titre indicatif, dans le mélange réalisé avec une matrice à base de polyoléfine, la quantité de déchets de matières thermoplastiques semi-cristallines incorporée est de l'ordre de 30% de la masse totale du mélange.

Avantageusement, les déchets de matières thermoplastiques semi-cristallines sont incorporés, dans la matrice à base de polyoléfine, sous la forme de particules de très petites dimensions, notamment sous la forme de poudre. Ceci permet une diffusion plus homogène desdits déchets, lors du mélange.

La matrice, dans laquelle sont incorporés les déchets de matières thermoplastiques semi-cristallines, est notamment une matrice à base de polyéthylène et/ou de polypropylène et/ou de dérivés de ces matières.

Avantageusement, le mélange de ladite matrice avec les déchets de matières thermoplastiques semi-cristallines est complété par l'ajout d'un plastifiant et/ou d'une charge élastomérique. Ces adjuvants, incorporés selon un certain pourcentage (par exemple de 5 à 10%), permettent d'améliorer la tenue aux chocs de la matrice à base de polyoléfine, sans que l'apport de polyéthylène téréphtalate, ou analogue, soit nuisible à la qualité du mélange final.

L'opération de mélange des déchets de matières thermoplastiques semi-cristallines, avec la matrice à base de polyoléfine, est réalisable selon diverses techniques connues en soi, telles que l'agglomération ou le compoundage. Préalablement à cette opération de mélange, les déchets sont broyés et/ou déchiquetés, à l'aide de dispositifs connus en soi.

L'incorporation des déchets de matières thermoplastiques semi-cristallines à la matrice à base de polyoléfine est réalisable avant l'utilisation du mélange, ainsi constitué, sur une presse à injecter.

Selon une autre possibilité, l'incorporation des déchets de matières thermoplastiques semi-cristallines à la matrice à base de polyoléfine est réalisée seulement au moment de l'utilisation du mélange, ainsi constitué, sur une presse à injecter.

Comme il va de soi, l'invention ne se limite pas aux seuls modes de mise en oeuvre de ce procédé pour la récupération de déchets de matières thermoplastiques semi-cristallines qui ont été décrits ci-dessus, à titre d'exemples ; elle en embrasse, au contraire, toutes les variantes respectant le même principe, ces variantes pouvant concerner tant le mode opératoire que les applications.

En particulier, le procédé restera applicable quelle que soit la nature des déchets de matières thermoplastiques semi-cristallines, et mis à part le polyéthylène téréphtalate, ce procédé peut être appliqué entre autres à des déchets de :
- polyaryl-cétones (PEEK, PAEK);
- polychlorure de vinyle (PVC) ;
- polybutadiène téréphtalate (PBT);
- polyphénylène sulfone (PPS);
- polyamides, polyamides aromatiques ;
- copolymères polyéthylène-acétate de vinyle ;
- certains alliages de matières thermoplastiques, par exemple : alliage de polyamide 6 et de polypropylène.

De manière analogue, la matrice peut être constituée à base de toutes polyoléfines, et la nature et les proportions d'éventuels plastifiants et/ou charges élastomériques peuvent varier, du moment que les déchets de matières thermoplastiques semi-cristallines sont utilisés comme une charge minoritaire dans le mélange.

## Revendications

1. Procédé pour la récupération de déchets de matières thermoplastiques semi-cristallines, en particulier pour le recyclage de déchets de polyéthylène téréphatalate (PET), consistant à incorporer ces déchets de matières thermoplastiques semi-cristallines, sous forme amorphe, à une matrice à base de polyoléfine, avant d'utiliser le mélange ainsi obtenu comme matière transformable sur une presse à injecter, **caractérisé en ce que** ce mélange est transformé, sur une presse à injecter, à une température inférieure à la température de fusion des matières semi-cristallines utilisées.

2. Procédé selon la revendication 1, **caractérisé en ce que**, dans le mélange réalisé avec une matrice à base de polyoléfine, la quantité de déchets de matières thermoplastiques semi-cristallines incorporée est de l'ordre de 30% de la masse totale de mélange.

3. Procédé selon la revendication 1 ou 2, **caractérisé en ce que** les déchets de matières thermoplastiques semi-cristallines sont incorporés, dans la matrice à base de polyoléfine, sous la forme de particules de très petites dimensions, notamment sous la forme de poudre.

4. Procédé selon l'une quelconque des revendications 1 à 3, **caractérisé en ce que** la matrice, dans laquelle sont incorporés les déchets de matières thermoplastiques semi-cristallines, est une matrice à base de polyéthylène et/ou de polypropylène et/ou de dérivés de ces matières.

5. Procédé selon l'une quelconque des revendications 1 à 4, **caractérisé en ce que** le mélange de ladite matrice avec les déchets de matières thermoplastiques semi-cristallines est complété par l'ajout d'un plastifiant et/ou d'une charge élastomérique.

6. Procédé selon l'une quelconque des revendications 1 à 5, **caractérisé en ce que** le mélange des déchets de matières thermoplastiques semi-cristallines, avec la matrice à base de polyoléfine, est réalisé par agglomération ou par compoundage.

7. Procédé selon l'une quelconque des revendications 1 à 6, **caractérisé en ce que** l'incorporation des déchets de matières thermoplastiques semi-cristallines à la matrice à base de polyoléfine est réalisée avant l'utilisation du mélange, ainsi constitué, sur une presse à injecter.

8. Procédé selon l'une quelconque des revendications 1 à 6, **caractérisé en ce que** l'incorporation des déchets de matières thermoplastiques semi-cristallines à la matrice à base de polyoléfine est réalisée seulement au moment de l'utilisation du mélange, ainsi constitué, sur une presse à injecter.

## Claims

1. Process for the recovery of semicrystalline thermoplastic waste, particularly for the recycling of polyethylene terephthalate (PET) waste, consisting in incorporating said semicrystalline thermoplastic waste, in amorphous form, into a polyolefin-based matrix before the resulting mixture is used as a transformable material on an injection press, **characterized in that** said mixture is transformed on an injection press at a temperature below the melting point of the semicrystalline materials used.

2. Process according to Claim 1, **characterized in that** the amount of semicrystalline thermoplastic waste incorporated into the mixture produced with a polyolefin-based matrix is in the order of 30% of the total weight of the mixture.

3. Process according to Claim 1 or 2, **characterized in that** the semicrystalline thermoplastic waste is incorporated into the polyolefin-based matrix in the form of particles of very small dimensions and especially in the form of powder.

4. Process according to any one of Claims 1 to 3, **characterized in that** the matrix into which the semicrystalline thermoplastic waste is incorporated is a matrix based on polyethylene and/or polypropylene and/or derivatives of these materials.

5. Process according to any one of Claims 1 to 4, **characterized in that** the mixing of said matrix with the semicrystalline thermoplastic waste is complemented by the addition of a plasticizer and/or an elastomeric filler.

6. Process according to any one of Claims 1 to 5, **characterized in that** the mixing of the semicrystalline thermoplastic waste with the polyolefin-based matrix is carried out by agglomeration or compounding.

7. Process according to any one of Claims 1 to 6, **characterized in that** the incorporation of the semicrystalline thermoplastic waste into the polyolefin-based matrix is carried out before the resulting mixture is used on an injection press.

8. Process according to any one of Claims 1 to 6, **characterized in that** the incorporation of the semicrystalline thermoplastic waste into the polyolefin-based matrix is only carried out at the time when the resulting mixture is used on an injection press.

## Patentansprüche

1. Verfahren zur Wiederverwertung von Abfällen aus halbkristallinen thermoplastischen Stoffen, vor allem für das Recycling von Abfällen aus Polyethylen-Terephtalat (PET), das darin besteht, diese Abfälle aus halbkristallinen thermoplastischen Stoffen in amorpher Form einer Matrix auf Basis von Polyolefin vor der Verwendung der so erhaltenen Mischung als umwandelbaren Stoff in einer Spritzgusspresse beizumischen, **dadurch gekennzeichnet, dass** diese Mischung auf einer Spritzgusspresse bei einer Temperatur umgewandelt wird, die unter der Schmelztemperatur der verwendeten halbkristallinen Stoffe liegt.

2. Verfahren nach Anspruch 1, **dadurch gekennzeichnet, dass** in der Mischung, die mit einer Matrix auf Basis von Polyolefin realisiert wird, die beigemischte Menge der Abfälle aus halbkristallinen thermoplastischen Stoffen in einer Größenordnung von 30 % der Gesamtmasse der Mischung liegt.

3. Verfahren nach Anspruch 1 oder 2, **dadurch gekennzeichnet, dass** die Abfälle aus halbkristallinen thermoplastischen Stoffen der Matrix auf Basis von Polyolefin in Form von Teilchen mit sehr kleinen Abmessungen, insbesondere in Form von Pulver, beigemischt werden.

4. Verfahren nach einem der Ansprüche 1 bis 3, **dadurch gekennzeichnet, dass** die Matrix, der die Abfälle aus halbkristallinen thermoplastischen Stoffen beigemischt werden, eine Matrix auf Basis von Polyethylen und/oder Polypropylen und/oder Derivaten dieser Stoffe ist.

5. Verfahren nach einem der Ansprüche 1 bis 4, **dadurch gekennzeichnet, dass** die Mischung der Matrix mit den Abfällen aus halbkristallinen thermoplastischen Stoffen durch die Zugabe eines Weichmachers und/oder einem Elastomerzuschlag vervollständigt wird.

6. Verfahren nach einem der Ansprüche 1 bis 5, **dadurch gekennzeichnet, dass** die Mischung aus Abfällen aus halbkristallinen thermoplastischen Stoffen mit der Matrix auf Basis von Polyolefin durch Agglomeration oder durch Compoundierung realisiert wird.

7. Verfahren nach einem der Ansprüche 1 bis 6, **dadurch gekennzeichnet, dass** die Beimischung der Abfälle aus halbkristallinen thermoplastischen Stoffen zur Matrix auf Basis von Polyolefin vor der Verwendung der so gebildeten Mischung auf einer Spritzgusspresse realisiert wird.

8. Verfahren nach einem der Ansprüche 1 bis 6, **dadurch gekennzeichnet, dass** die Beimischung der Abfälle aus halbkristallinen thermoplastischen Stoffen zur Matrix auf Basis von Polyolefin nur zum Zeitpunkt der Verwendung der Mischung auf einer Spritzgusspresse realisiert wird.
